# Europäisches Patentamt

# European Patent Office

# Office européen des brevets

(11) Veröffentlichungsnummer: **0 127 823**
**B1**

(12) **EUROPÄISCHE PATENTSCHRIFT**

(45) Veröffentlichungstag der Patentschrift:
02.09.87

(21) Anmeldenummer: **84105682.3**

(22) Anmeldetag: **18.05.84**

(51) Int. Cl.⁴: **G 01 N 27/56**

(54) **Gassensor.**

(30) Priorität: 28.05.83 DE 3319486

(43) Veröffentlichungstag der Anmeldung:
12.12.84 Patentblatt 84/50

(45) Bekanntmachung des Hinweises auf die Patenterteilung:
02.09.87 Patentblatt 87/36

(84) Benannte Vertragsstaaten:
CH DE FR GB IT LI NL SE

(56) Entgegenhaltungen:
DE-A-2 350 253
DE-A-2 360 818
DE-A-2 702 578
DE-A-2 707 062
DE-A-3 041 581
DE-A-3 105 089
US-A-4 370 213

(73) Patentinhaber: ROBERT BOSCH GMBH, Postfach
50, D-7000 Stuttgart 1 (DE)

(72) Erfinder: Burkhardt, Joachim, Ing. grad.,
Lindenbühlweg 25, D-7012 Fellbach (DE)
Erfinder: Dreyer, Manfred, Ing. grad., Otterweg 25,
D-7014 Kornwestheim (DE)
Erfinder: Klett, Dittmar, Ing. grad., Schillerstrasse
15, D-7127 Pleidelsheim (DE)
Erfinder: Weyl, Helmut, Dipl. Ing., Peter- von-
Koblenzstrasse 34, D-7141 Schwieberdingen (DE)

LIBER, STOCKHOLM 1987

## Beschreibung

### Stand der Technik

Die Erfindung geht aus von einem Gassensor nach der Gattung des Anspruchs 1. Ein solcher Gassensor für Abgase von Brennkraftmaschinen ist bekannt aus der DE-A-30 41 581 und hat einen meßgasfernen Anschlußbereich, der die freie Zirkulation der atmosphärischen Luft zur inneren Elektrode des Sensors erlaubt, jedoch den Eintritt von Wasser, Schmutz, Staub, Öl und anderen Verunreinigungen in den Innenraum des Sensors verhindert. Der Aufbau dieses Anschlußbereiches des Sensors ist mit relativ hohem Teile- und Montageaufwand (manuell und/oder Einrichtungen) verbunden.

Es ist auch schon ein Gassensor für Abgase von Brennkraftmaschinen beschrieben worden (DE-A-29 13 633), bei dem das Anschlußkabel an einem verwindungssteifen, meßgasseits mit einem Sensorelement elektrisch verbundenen Verbindungsteil befestigt ist und durch ein Dichtelement im Boden einer meßgasfernen Verschlußhülse nach außen herausgeführt ist; bei dieser Ausführungsform des Kabelanschlusses befriedigt nicht der Grad der Abdichtung und die im Innenraum des Gassensors befindliche Verbindung von Verbindungsteil und Anschlußkabel ist umständlich herzustellen.

Weiterhin ist es bekannt, einen mit Kabel und Schutzhülse versehenen Anschlußstecker auf entsprechende Anschlußmittel am meßgasfernen Endabschnitt eines Gassensors aufzustecken (US-PS 4 325 600); eine solche Ausführungsform ist jedoch sehr teuer.

### Vorteile der Erfindung

Der erfindungsgemäße Gassensor mit den kennzeichnenden Merkmalen des Anspruchs 1 hat demgegenüber den Vorteil, daß die Durchführung seines Anschlußleiter, durch den Boden der meßgasfernen Verschlußhülse völlig abgedichtet, einfach herzustellen und kostengünstig ist.

Durch die in den abhängigen Ansprüchen aufgeführten Maßnahmen sind vorteilhafte Weiterbildungen und Verbesserungen des im Anspruch 1 angegebenen Gassensor, möglich. Besonders vorteilhaft ist es, wenn die zur Anwendung kommende, meßgasfern befindliche Überwurfhülse im meßgasnahen Bereich ihrer Mittenbohrung und die Außenseite des Hohlschaftes des den Verschlußhülsen-Boden abdichtenden Dichtelementes mit koaxialen, ineinanderrastenden Ringnuten bzw. Ringwulsten mit sägezahnartigem Profil versehen sind.

## Zeichnung

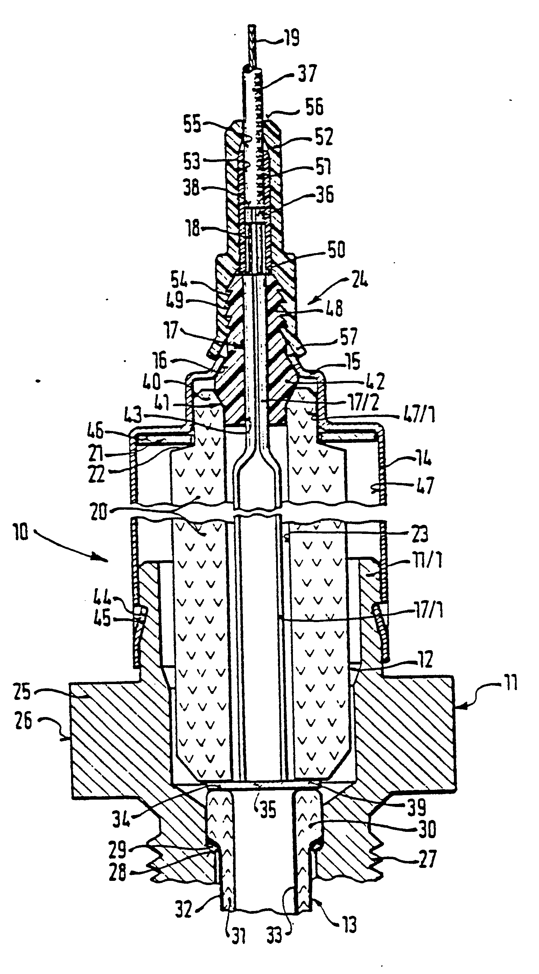

Ein Ausführungsbeispiel der Erfindung ist in der Zeichnung dargestellt und in der nachfolgenden Beschreibung näher erläutert; die Figur zeigt einen Längsschnitt durch einen vergrößert dargestellten Gassensor nach der Erfindung.

### Beschreibung des Ausführungsbeispiels

Der in der Figur gezeigte Gassensor 10 besitzt ein rohrförmiges Metallgehäuse 11, ein meßgasseits aus dem Innenraum 12 des Metallgehäuses 11 herausragendes Sensorelement 13, eine mit dem Metallgehäuse 11 verbundene meßgasferne, metallische Verschlußhülse 14 mit einem in ihrem meßgasfernen Boden 15 angebrachtem Durchbruch 16, ein mit dem Sensorelement 13 elektrisch verbundenes, verwindungssteifes Verbindungsteil 17 mit einem aus Boden-Durchbruch 16 der Verschlußhülse 14 herausragenden Anschlußbereich 18 für ein Anschlußkabel 19, ein Innenraum 12 des Metallgehäuses 11 fixiertes, keramisches Isolierrohr 20 mit einer meßgasfernen, ein ringförmiges Federelement 21 tragenden Außenschulter 22 und mit einer das Verbindungsteil 17 aufnehmenden Längsbohrung 23 und eine meßgasferne Abdichtung 24 des Gassensors 10.

Das Metallgehäuse 11 hat an seiner Außenseite einen Flansch 25, welcher an seiner Außenseite mit einem Schlüsselsechskant 26 versehen ist und dem sich meßgasseits ein Einschraubgewinde 27 für den Einbau in eine nicht dargestellte Meßgasleitung anschließt. Auf einer Schulter 28 im meßgasseitigen Bereich des Innenraumes 12 des Metallgehäuses 11 ist ein Dichtring 29 angeordnet, auf welchem der Kopf 30 eines rohrartigen, mit einem (nicht dargestellten) meßgasseitigen Boden versehenen Festelektrolyten 31 des Sensorelementes 13 abgedichtet aufliegt, das Sensorelement 13 ist im vorliegenden Beispiel zum Messen des Sauerstoffpartialdruckes im Meßgas vorgesehen - wie es aus der einleitend bereits erwähnten DE-OS-29 13 633 bereits bekannt ist. Die auf der Außenseite des Festelektrolyten 31 angeordnete Leiterbahn 32 endet dabei meßgasfern im Bereich des Dichtungsringes 29 und die auf der Innenseite des Festelektrolyten 31 angeordnete Leiterbahn 33 endet auf der meßgasfernen Stirnfläche 34 des Festelektrolyten 31.

Auf dieser meßgasfernen Stirnfläche 34 des Sensorelementes 13 liegt der Kontaktflansch 35 des verwindungssteifen Verbindungsteiles 17 auf; der axial im Metallgehäuse 11 verlaufende Schaft 17/1 des Verbindungsteils 17 ist aus einem Metallblech U-förmig gebogen und setzt sich meßgasfern, im Bereich der meßgasfernen Abdichtung 24 als ringförmiger Endabschnitt 17/2 fort. Auf dem meßgasfernen Bereiche dieses ringförmigen Bndabschnitts 17/2 ist der Anschlußbereich 18 für das Anschlußkabel 19 angeordnet; dabei ist das zumeist litzenförmige Anschlußkabel 19 in diesem Anschlußbereich 18 durch Verquetschen (Crimpen) in bevorzugter Weise festgelegt, während die meßgasseitige Stirnfläche 36 des das Anschlußkabel 19 umgebenden Isoliermantels 37 auf der meßgasfernen Endfläche 38 des Verbindungsteils 17 aufsteht. Am meßgasfernen Ende des mit einem Isoliermantel 37 umgebenen Anschlußkabels 19 ist ein nicht dargestelltes Verbindungselement (z. B. Anschlußstecker) befestigt.

Das Elektroisolierrohr 20, welches in seiner Längsbohrung 23 einen erheblichen Teil des Verbindungsteiles 17 umfaßt, besteht aus elektrisch isolierender Keramik (z. B. gesintertem Aluminiumoxid) und steht mit seiner meßgasseitigen Endfläche 39 auf der meßgasfernen Seite des Kontaktflansches 35 des Verbindungsteils 17 auf; der meßgasseitige Endabschnitt des Elektroisolierrohrers 20 ist im Innenraum 12 des Metallgehäuses 11 seitlich fixiert, während der meßgasseitige Abschnitt des Elektroisolierrohres 20 aus dem meßasfernen, als Rohrstutzen 11/1 ausgebildeten Abschnitt des Metallgehäuses 11 herausragt. Der meßgasferne Endbereich 40 des Elektroisolierrohres 20, welcher infolge seiner Außenschulter 22 einen gegenüber dem Hauptbereich des Elektroisolierrohres 20 verkleinerten Durchmesser hat, trägt meßgasfern ein Dichtelement dieses Dichtelement 41, das aus einem nachgiebigen Material (z. B. PTFE) besteht, ist in bevorzugter Weise ein Formteil, welches mit seinem meßgasseitigen Endabschnitt in die Längsbohrung 23 des Elektroisolierrohres 20 hineinragt und sich mit einem Kopf 42 auf dem Endbereich 40 des Elektroisolierrohres 20 abstützt. Die Seitenflächen des Kopfes 42 sind bevorzugt kegelstumpfförmig ausgebildet. Dieses Dichtelement 41 umfaßt in seiner Längsbohrung 43 den ringförmigen Endabschnitt 17/2 des Verbindungsteiles 17 und erstreckt sich bis zum Anschlußbereich 18 dieses Verbindungsteiles 17; die Längsbohrung 43 des Dichtelementes 41 ist so bemessen, daß sie im wesentlichen spielfrei den ringförmigen Endabschnitt 17/2 des Verbindungsteils 17 umgibt, jedoch derart, daß das Dichtelement 41 ohne wesentlichen Kraftaufwand auf den Endabschnitt 17/2 aufgeschoben werden kann.

Auf den Rohrstutzen 11/1 des Metallgehäuses 11 ist die Verschlußhülse 14 aufgeschoben, die aus einem geeigneten Metallblech besteht, mittels meßgasseits eingescherter Lappen 44 in Vertiefungen 45 auf dem Rohrstutzen 11/1 festgelegt ist und meßgasfern den Boden 15 mit dem axialen Durchbruch 18 trägt; der Durchbruch 16 im Boden 15 ist dabei kegelstumpfförmig nach außen hin aufgeweitet und legt sich in diesem Bereich auf die meßgasferne Seite des Dichtelement-Kopfes 42. Die Verschlußhülse 14 ist außerdem mit einem Absatz 46 versehen, auf dem sich das auf der Außenschulter 22 des Elektroisolierrohres 20 aufliegende Federelement 21 (Tellerfeder) mit dem Außenbereich seiner meßgasfernen Seite abstützt. Die Lappen 44 der Verschlußhülse 14 und die Vertiefungen 45 auf der Außenseite des Metallgehäuses-Rohrstutzens 11/1 sind ihrer Anordnung so bemessen, so daß das Federelement 21 mechanisch vorgespannt ist, demzufolge das Elektroisolierrohr 20 fest gegen den Kontaktflansch 35 des Verbindungsteils 17 drückt und außerdem der Kopf 30 des Sensorelementes fest und abdichtend gegen den auf der Metallgehäuse-Schulter 28 liegenden Dichtring 29 gepreßt ist. Der Innenraum 47 der Verschlußhülse 14 ist in seinem dem Boden 15 nahen Endbereich 47/1 derart bemessen, so daß der meßgasferne Endbereich 40 des Elektroisolierrohres 20 seitlich darin geführt ist. Infolge der von dem Federelement 21 und der Elastizität des Bodens 15 sowie dessen angrenzenden Bereichs der Verschlußhülse 14 ausgeübten mechanischen Spannung wird der kegelstumpfförmige Durchbruch 16 der Verschlußhülse 14 fest und abdichtend gegen die meßgasferne Seite des Dichtelement-Kopfes 42 gepreßt.

Dieses zur meßgasfernen Abdichtung 24 der Verschlußhülse 14 zugehörige Dichtelement 41 ragt meßgasfern mit einem Hohlschaft 48 aus dem Durchbruch 18 der Verschlußhülse 14 heraus und ist auf seiner Außenseite mit mehreren eingeformten, koaxialen Ringnuten 49 versehen, weiche in bevorzugter Weise ein sägezahnartiges Profil haben. Die meßgasferne Stirnfläche dieses Dichtelementes 41 hat das Bezugszeichen 50.

Auf dem meßgasseitigen Endabschnitt des mit einem Isoliermantel 37 überzogenen Anschlußkabels 19 und über den hülsenartigen, den meßgasseitigen Endabschnitt des Anschlußkabels 19 fest umfassenden Anschlußbereich 18 des Verbindungsteils 17 ist ein Dichtschlauch 51 aufgezogen, der aus einem nachgiebigen Material wie z. B. PTFE besteht, ohne wesentlichen Kraftaufwand auf das Anschlußkabel 19 mit Isoliermantel 37 und den Anschlußbereich 18 des Verbindungsteils 17 aufschiebbar ist und mit seiner meßgasseitigen Stirnfläche auf der meßgasfernen Stirnfläche 50 des Dichtelementes 41 aufsteht.

Eine ebenfalls aus einem nachgiebigen Material wie PTFE hergestellte Überwurfhülse 52 ist mit ihrer Mittenbohrung 53 ebenfalls auf das mit einem Isoliermantel 37 versehene Anschlußkabel 19 aufgefädelt und umfaßt seitlich in ihrer Mittenbohrung 53 im wesentlichen spiellos den Dichtschlauch 51 und mit ihrem meßgasseitigen Bereich den Hohlschaft 48 des Dichtelementes 41. Die Innenseite des meßgasseitigen Bereichs der Mittenbohrung 53 ist mit einigen koaxialen Ringwulsten 54 versehen, welche in bevorzugter Weise ein solches sägezahnartiges Profil haben, so daß sie unlösbar in die sägezahnartigen Ringnuten 49 des Dichtelement-Hohlschaftes 48 einzurasten vermögen. Die Ringnuten 49 im Dichtelement 41 und die Ringwulste 54 in der Überwurfhülse 52 sind gemeinsam mit einer in der Überwurfhülsen-Mittenbohrung 53 meßgasfern angeordneten Anschlagfläche 55 derart bemessen, so daß der Dichtschlauch 51 in Längsrichtung verformt wird; infolge dieser Verformung des Dichtschlauches 51 wird die meßgasseitige Stirnfläche des Dichtschlauches 51 abdichtend auf die meßgasferne Stirnfläche 50 des Dichtelementes 41 aufgepreßt und der meßgasferne Endabschnitt des Dichtschlauches 51 fest und abdichtend an die Mittenbohrung 53 der Überwurfhülse 52 und an den Isoliermantel 37 des Anschlußkabels 19 angepreßt. Bei der bevorzugten Ausführungsform verjüngt sich die Überwurfhülsen-Mittenbohrung 53 zum meßgasfernen Ende der Überwurfhülse 52 hin und hat im Bereich der meßgasfernen Stirnfläche 56 der Überwurfhülse 52 einen Durchmesser, der dem Außendurchmesser des Anschlußkabel-Isoliermantels 37 entspricht. Der meßgasseitige Endabschnitt der Überwurfhülse 52 besitzt eine trichterförmige Aufweitung 57, welche den kegelstumpfförmigen Durchbruch 18 der Verschlußhülse 14 abdichtend überdeckt.

Es sei erwähnt, daß anstelle der montagefreundlichen Ringnuten 49 und Ringwulste 54 auch andere bekannte Verbindungsmittel (z. B. Schweißstellen) zum Festlegen der Überwurfhülse 52 auf dem Dichtelement 41 Anwendung finden können, daß sogar die Überwurfhülse 52 nicht unbedingt aus einem Kunststoff bestehen muß, sondern auch aus einem geeigneten Metall hergestellt sein kann; in letzterem Falle kann die trichterförmige Aufweitung 57 der Überwurfhülse 52 am kegelstumpfförmigen Durchbruch 16 der Verschlußhülse 14 (z. B. auch durch Schweißen) festgelegt sein.

Bemerkt sei außerdem, daß die beanspruchte Abdichtung 24 nicht nur für ein Sensorelement 13 geeignet ist, das einen Festelektrolyten 31 aufweist, sondern auch für solche, die einen ähnlichen Aufbau bzw. eine entsprechende Anordnung erfordern.

**Patentansprüche**

1. Gassensor, insbesondere für Abgase von Brennkraftmaschinen, mit einer meßgasfernen, vorzugsweise metallischen Verschlußhülse (14), welche mit einem das Sensorelement (13) aufnehmenden, Mittel für den Einbau in eine Meßgasleitung aufweisendem Metallgehäuse (11) verbunden ist und in ihrem meßgasfernen Boden (15) einen bevorzugt zentral angeordneten Durchbruch (16) aufweist, durch welchen ein aus dem Innenraum (47) der Verschlußhülse bzw. des Metallgehäuses herausgeführtes, elektrisches Verbindungsteil (17) verläuft, das bevorzugt aus Metall besteht, verwindungssteif ist, mit dem Sensorelement elektrisch in Verbindung steht, von einem auch den Durchbruch des Verschlußhülsen-Bodens abdichtenden Dichtelement (41) abdichtend umfaßt ist und einen aus der meßgasfernen Stirnfläche (50) des Dichtelementes herausragenden hülsenartigen Anschlußbereich (18) hat, in dem axial ein Anschlußkabel (19) elektrisch leitend festgelegt ist, wobei auf dem hülsenartigen Anschlußbereich des Verbindungsteils und dem meßgasseitigen Endabschnitt des mit einem Isoliermantel (37) überzogenen Anschlußkabels ein spiellos aufschiebbarer, nachgiebiger Dichtschlauch (51) angeordnet ist, der auf der meßgasfernen Stirnfläche des Dichtelementes aufsteht und mittels einer im wesentlichen spiellos den Dichtschlauch umfassenden Überwurfhülse (52) zusammengedrückt wird, so daß die das Anschlußkabel umfassende Mittenbohrung (53) der Überwurfhülse sowie die Berührungsebene zwischen der meßgasfernen Stirnfläche des Dichtelementes und der meßgasseitigen Endfläche des Dichtschlauches abgedichtet ist, dadurch gekennzeichnet, daß die Überwurfhülse (52) im meßgasfernen Bereich ihrer Mittenbohrung (53) eine Anschlagfläche (55) aufweist, die auf die meßgasferne Stirnfläche des Dichtschlauches (51) drückt, den Dichtschlauch (51) demzufolge in Längsrichtung zusammenstaucht, und daß die Überwurfhülse (52) direkt am Dichtelement (41) oder an der Verschlußhülse (14) befestigt ist.

2. Gassensor nach Anspruch 1, dadurch gekennzeichnet, daß das Dichtelement (41) meßgasfern aus dem Durchbruch (16) der Verschlußhülse (14) herausragt.

3. Gassensor nach Anspruch 2, dadurch gekennzeichnet, daß auf der Außenseite des meßgasfernen, aus der Verschlußhülse (14) herausragenden Hohlschafts (48) des Dichtelementes (41) mindestens eine koaxiale Ringnut (49) eingeformt ist, in welche jeweils ein entsprechender koaxialer Ringwulst (54) einrastet, der im meßgasseitigen Endabschnitt der Mittenbohrung (53) der Überwurfhülse (52) eingeformt ist.

4. Gassensor nach Anspruch 3, dadurch gekennzeichnet, daß auf dem Hohlschaft (48) des Dichtelementes (41) angeordnete Ringnuten (49) und in der Mittenbohrung (53) der Überwurfhülse (52) angeordnete Ringwulste (54) jeweils ein sägezahnartiges Profil haben, welche bei ihrem Eingriff das Dichtelement (41) und die Überwurfhülse (52) unlösbar miteinander verbinden.

5. Gassensor nach einem der Ansprüche 3 oder 4, dadurch gekennzeichnet, daß die Überwurfhülse (52) aus elastischem Material besteht.

6. Gassensor nach einem der Ansprüche 1 bis 5, dadurch gekennzeichnet, daß sich die Anschlagfläche (55) in der Mittenbohrung (53) der Überwurfhülse (52) kegelstumpfförmig zum meßgasfernen Ende der Überwurfhühlse (52) hin verjüngt.

7. Gassensor nach einem der Ansprüche 1 bis 6, dadurch gekennzeichnet, daß der am meßgasfernen Endabschnitt befindliche Durchmesser der Mittenbohrung (53) der Überwurfhülse (52) etwa dem Außendurchmesser des Anschlußkabel-Isoliermantels (37) entspricht.

8. Gassensor nach einem der Ansprüche 1 bis 7, dadurch gekennzeichnet, daß der meßgasseitige Endabschnitt der Überwurfhülse (52) den Durchbruch (16) im Verschlußhülsen-Boden (15) überdeckt, vorzugsweise auf dem Boden (15) aufliegt und den Boden-Durchbruch (16) demzufolge zusätzlich zum Dichtelement (41) abdichtet.

## Claims

1. Gas sensor, especially for exhaust gases of internal-combustion engines, with a preferably metallic closing sleeve (14) which is remote from the measuring gas and which is connected to a means, receiving the sensor element (13), for installation in a metal housing (11) having a measuring-gas line and in its bottom (15) remote from the measuring gas has a preferably centrally arranged perforation (16), through which extends an electrical connecting part (17) which is guided out of the interior (47) of the closing sleeve or metal housing and which preferably consists of metal, is tortion-resistant, is connected electrically to the sensor element, is surrounded sealingly by a sealing element (41) also sealing off the perforation in the closing-sleeve bottom, and has a sleeve-like connection region (18) which projects from the end face (50) of the sealing element remote from the measuring gas and in which a connecting cable (19) is fixed axially in an electrically conductive manner, there being arranged on the sleeve-like connection region of the connecting part and on the end portion, on the same side as the measuring gas, of the connecting cable covered with an insulating sheath (37) a flexible sealing tube (51) which can be pushed on free of play and which projects upwards on the end face of the sealing element remote from the measuring gas and is squeezed together by means of a coupling sleeve (52) surrounding the sealing tube essentially free of play, so that the centre bore (53), surrounding the connecting cable, of the coupling sleeve and the contact plane between the end face of the sealing element remote from the measuring gas and the end face of the sealing tube located on the same side as the measuring gas are sealed off, characterized in that the coupling sleeve (52), in the region of its centre bore (53) remote from the measuring gas, has a stop face (55) which presses onto the end face of the sealing tube (51) remote from the measuring gas and which consequently compresses the sealing tube (51) in the longitudinal direction, and in that the coupling sleeve (52) is fastened directly to the sealing element (41) or to the closing sleeve (14).

2. Gas sensor according to Claim 1, characterized in that the sealing element (41) projects from the perforation (16) in the closing sleeve (14) on the side remote from the measuring gas.

3. Gas sensor according to Claim 2, characterized in that at least one coaxial annular groove (49) is formed on the outside of the hollow shank (48) of the sealing element (41), the said hollow shank (48) being remote from the measuring gas and projecting from the closing sleeve (14), and a corresponding coaxial annular bead (54) engages respectively into the said annular groove (49) and is formed in that end portion of the centre bore (53) of the coupling sleeve (52) located on the same side as the measuring gas.

4. Gas sensor according to Claim 3, characterized in that annular grooves (49) arranged on the hollow shank (48) of the sealing element (41) and annular beads (54) arranged in the centre bore (53) of the coupling sleeve (52) have respective sawtooth-like profiles which, when they engage with one another, connect the sealing element (41) and the coupling sleeve (52) unreleasably to one another.

5. Gas sensor according to one of Claims 3 or 4, characterized in that the coupling sleeve (52) consists of elastic material.

6. Gas sensor according to one of Claims 1 to 5, characterized in that the stop face (55) in the centre bore (53) of the coupling sleeve (52) narrows frustoconically towards the end of the coupling sleeve (52) remote from the measuring gas.

7. Gas sensor according to one of Claims 1 to 6, characterized in that the diameter of the centre bore (53) of the coupling sleeve (52) which is in the end portion remote from the measuring gas corresponds approximately to the outside diameter of the connecting-cable insulating sheath (37).

8. Gas sensor according to one of claims 1 to 7, characterized in that the end portion of the coupling sleeve (52) located on the same side as the measuring gas covers the perforation (16) in the closing-sleeve bottom (15), preferably rests on the bottom (15) and consequently seals off the bottom perforation (16) in addition to the sealing element (41).

## Revendications

1. Capteur de gaz, en particulier pour gaz d'échappement de moteurs à combustion interne, comportant, côté opposé au gaz à doser, une douille de fermeture (14) qui est, de préférence, métallique, qui est reliée à un carter métallique (11) logeant l'élément capteur (13) et présentant un moyen pour le montage dans la conduite de gaz à doser et qui présente, dans son fond (15) côté opposé au gaz à doser, une découpe (16) qui est, de préférence, disposée dans l'axe et à travers laquelle passe une pièce de liaison électrique (17) qui sort de l'espace intérieur (47) de la douille de fermeture ou du carter métallique, qui est, de préférence, en métal, qui est rigide en torsion, qui est en liaison électrique avec l'élément capteur, qui est enserrée de façon étanche par un élément d'étanchéité (41) assurant également l'étanchéité de la découpe du fond de la douille de fermeture et qui présente une zone de raccordement (18) en forme de douille qui sort hors de la surface frontale (50), côté opposé au gaz à doser, de l'élément d'étanchéité et dans laquelle est fixé axialement, avec conduction électrique, un câble de raccordement (19); étant précisé que, sur la zone de raccordement en forme de douille de la pièce de liaison et sur la portion d'extrémité, côté gaz à doser, du câble de raccordement revêtu d'une enveloppe isolante (37), est disposée une gaine souple d'étanchéité (51) que l'on peut enfiler sans jeu, qui monte sur la surface frontale, côté opposé au gaz à doser, de l'élément d'étanchéité et qu'une douille-chapeau (52), qui enserre sensiblement sans jeu cette gaine souple d'étanchéité, comprime de façon telle que l'alésage médian (53), enserrant le câble de raccordement, de la douille-chapeau ainsi que le plan de contact entre la surface frontale, côté opposé au gaz à doser, de l'élément d'étanchéité et la surface d'extrémité, côté gaz à doser, de la gaine souple d'étanchéité, sont rendus étanches, caractérisé en ce que la douille-chapeau (52) présente, dans la zone, côté opposé au gaz à doser, de son alésage médian (53), une surface de butée (55) qui appuie sur la surface frontale, côté opposé au gaz à doser, de la gaine souple d'étanchéité (51), qui refoule en conséquence la gaine souple d'étanchéité (51) en direction longitudinale; et en ce que la douille-chapeau (52) est directement fixée à l'élément d'étanchéité (41) ou à la douille de fermeture (14).

2. Capteur de gaz selon la revendication 1, caractérisé en ce que l'élément d'étanchéité (41), côté opposé au gaz à doser, sort hors de la découpe (16) de la douille de fermeture (14).

3. Capteur de gaz selon la revendication 2, caractérisé en ce que, sur la face extérieure du fût creux (48) sortant, côté opposé au gaz à doser, hors de la douille de fermeture (14), de l'élément d'étanchéité (41) est venue de forme au moins une rainure annulaire coaxiale (49) dans laquelle vient respectivement se cranter un bourrelet annulaire (54) coaxial correspondant qui est venu de forme dans la portion d'extrémité, côté gaz à doser, de l'alésage médian (53) de la douille-chapeau (52).

4. Capteur de gaz selon la revendication 3, caractérisé en ce que des rainures annulaires (49) disposées sur le fût creux (48) de l'élément d'étanchéité (41) et des bourrelets annulaires (54) disposés dans l'alésage médian (53) de la douille chapeau (52) présentent respectivement des profils en dents de scie qui relient de façon non détachable, l'un à l'autre, lors de leur prise de contact, l'élément d'étanchéité (41) et la douille-chapeau (52).

5. Capteur de gaz selon l'une des revendications 3 ou 4, caractérisé en ce que la douille-chapeau (52) est consituée d'un matériau élastique.

6. Capteur de gaz selon l'une des revendications 1 à 5, caractérisé en ce que la surface de butée (55) qui se trouve dans l'alésage médian (53) de la douille-chapeau (52) va en se rétrécissant en forme de tronc de cône vers l'extrémité, côté opposé au gaz à doser, de la douille-chapeau (52).

7. Capteur de gaz selon l'une des revendications 1 à 6, caractérisé en ce que le diamètre, sur la portion d'extrémité côté opposé au gaz à doser, de l'alésage médian (53) de la douille-chapeau (52) correspond à peu près au diamètre extérieur de l'enveloppe isolante (37) du câble de raccordement.

8. Capteur de gaz selon l'une des revendications 1 à 7, caractérisé en ce que la portion d'extrémité, côté gaz à doser, de la douille-chapeau (52) recouvre la découpe (16) du fond (15) de la douille de fermeture, repose, de préférence sur le fond (15) et, en plus de l'élément d'étanchéité (41), assure par conséquent l'étanchéité de la découpe du fond (16).